# FASCICULE DE BREVET EUROPEEN

(11) **EP 2 761 416 B1**
(45) Date de publication et mention de la délivrance du brevet: **16.01.2019**
(21) Numéro de dépôt: 12756771.7
(22) Date de dépôt: 08.08.2012
(51) Int. Cl.: G06F 3/042, H01L 21/312, H01L 27/14

(54) **INTERFACE UTILISATEUR SANS CONTACT A COMPOSANTS SEMICONDUCTEURS ORGANIQUES**
KONTAKTLOSE BENUTZERSCHNITTSTELLE MIT ORGANISCHEN HALBLEITERBAUELEMENTEN
CONTACTLESS USER INTERFACE HAVING ORGANIC SEMICONDUCTOR COMPONENTS

(30) Priorité: 27.09.2011 FR 1158609
(43) Date de publication de la demande: 06.08.2014
(73) Titulaire: ISORG, 38000 Grenoble (FR); Commissariat à l'Énergie Atomique et aux Énergies Alternatives, 75015 Paris (FR)
(72) Inventeur: GOMEZ, Jean-Yves, F-38000 Grenoble (FR); JAMET, Laurent, F-38000 Grenoble (FR); GUERINEAU, Emmanuel, F-38000 Grenoble (FR); PREMONT, Christophe, F-38000 Grenoble (FR)
(74) Mandataire: Cabinet Beaumont
(86) Numéro de dépôt international: PCT/FR2012/051864
(87) Numéro de publication internationale: WO 2013/045780

(56) Documents cités:
- US-A1- 2009 123 029
- AEPI, Agence d'Étude et de Promotion de l'Isère: "ISORG a présenté lors du Forum 4I une tablette interactive", , 19 juin 2011 (2011-06-19), XP002674961, Extrait de l'Internet: URL:http://www.isorg.fr/rep-edito/ido-61/i sorg_a_prb_sentb_lors_du_forum_4i_une_tabl ette_interactive.html [extrait le 2012-04-27]
- Christophe Premont: "Photo detectors and sensors designed to be flexible", Electronic Engineering Times Europe, 14 septembre 2011 (2011-09-14), pages 17-18, XP002674972, Extrait de l'Internet: URL:http://www.isorg.fr/edito/files/photod etectors_and_sensors_designed_to_be_flexib le_798566.pdf [extrait le 2012-04-25]
- Marie Freebody: "New Materials Build Better Organic Photodetectors", , 9 août 2011 (2011-08-09), pages 1-3, XP002674974, Extrait de l'Internet: URL:http://www.isorg.fr/edito/files/new_ma terials_build_better_organic_photodetector s_174887.pdf [extrait le 2012-04-25]
- Laurent Marchandiau: "Isorg parie sur l'électronique organique imprimée", L'essor, 12 septembre 2011 (2011-09-12), XP002674975, Extrait de l'Internet: URL:http://lessor.fr/2011/09/12/interview- eco-isorg-parie-sur-l%E2%80%99electronique -organique-imprimee/ [extrait le 2012-04-24]
- Laurent Jamet (ISORG): "The Next Big Wave In The Electronics Industry", Onboard Technology, 14 septembre 2011 (2011-09-14), pages 32-34, XP002674899, Extrait de l'Internet: URL:http://www.isorg.fr/edito/files/the_ne xt_big_wave_in_the_electronics_industry_57 9453.pdf [extrait le 2012-04-25]
- Olivier Pentier: "Isorg rend les surfaces intelligentes", Le Dauphiné Libéré, 6 septembre 2011 (2011-09-06), pages 5-5, XP002674900, Extrait de l'Internet: URL:http://www.isorg.fr/edito/files/isorg_ rend_les_surfaces_intelligentes_379449.pdf [extrait le 2012-04-25]
- CEA-LITEN, ISORG: "L'électronique organique imprimée : pour une industrie électronique durable qui répond aux nouveaux besoins de société", Dossiers thématiques du SITELESC, no. 1 juin 2011 (2011-06), pages 12-13, XP002674901, Extrait de l'Internet: URL:http://www.isorg.fr/edito/files/l_b_le ctronique_organique_imprimb_e_pour_une_ind ustrie_b_lectronique_durable_qui_rb_pond_a ux_nouveuaux_besoins_de_socib_tb__478919.p df [extrait le 2012-04-25]
- LAURENT JAMET (ISORG): "Organic Photodetectors and Image Sensors, Highly Innovative Products for New Markets and Attractive Business Opportunities for the Printed Electronics Industry", PRINTED ELECTRONICS AND PHOTOVOLTAICS EUROPE 2011, IDTECHEX, UK , 6 avril 2011 (2011-04-06), pages 1-17, XP008151359, Extrait de l'Internet: URL:http://www.idtechex.com/events/present ations/organic-photodetectors-and-image-se nsors-highly-innovative-products-for-new-m arkets-and-attractive-business-opportuniti es-for-the-printed-electronics-industry-00 2723.asp [extrait le 2012-04-26]
- Pascal Coutance: "L'avenir appartient à l'électronique imprimée", , 28 janvier 2012 (2012-01-28), XP002674911, Extrait de l'Internet: URL:http://www.isorg.fr/fr/rep-edito/ido-9 9/l_avenir_appartient_b_l_b_lectronique_im primb_e.html [extrait le 2012-04-25]

## Description

### Domaine de l'invention

La présente invention concerne un dispositif d'interface utilisateur, ou interface homme-machine.

### Exposé de l'art antérieur

On a déjà proposé des dispositifs d'interface utilisateur contrôlables par simple glissement du doigt ou de la main sur une surface sensible au toucher, ou surface tactile. La surface tactile peut être superposée à un écran d'affichage, ce qui permet de réaliser une interface utilisateur interactive, ou écran tactile.

Les écrans et surfaces tactiles sont actuellement utilisés dans de nombreux domaines. A titre d'exemple, ils ont déjà été utilisés pour commander des téléphones mobiles, des ordinateurs, des postes de télévision, des véhicules automobiles, des billetteries automatiques, des équipements industriels, des équipements médicaux, etc.

Un inconvénient de ce type d'interface est que la surface tactile tend à se salir assez rapidement au contact des doigts des utilisateurs. Ceci implique qu'un nettoyage régulier doit être prévu, en particulier en cas d'utilisation dans des environnements salissants (usines, transports en communs, etc.). Les surfaces tactiles posent en outre un problème d'hygiène, en particulier dans les hôpitaux où elles peuvent être un vecteur de transmission de maladies. Par ailleurs, le fonctionnement des surfaces tactiles est généralement dégradé lorsque l'utilisateur est équipé de gants. Ceci peut poser problème dans certains domaines d'application (industrie, chirurgie, utilisation en extérieur par temps froid, billetterie automatique de station de ski, etc.).

La demande de brevet US20080297487 décrit l'utilisation d'un ou plusieurs capteurs de proximité en combinaison avec un écran tactile, pour détecter des évènements tels que le survol d'un organe d'actionnement (doigt, main, objet, etc.) au dessus de l'écran. Ceci permet à l'utilisateur de réaliser certaines actions sans avoir à toucher la surface tactile. Les capteurs de proximité décrits dans ce document comprennent au moins un émetteur infrarouge et au moins un récepteur infrarouge. En fonctionnement, le capteur émet en permanence un rayonnement infrarouge. Lorsqu'un doigt, une main, ou un objet passe à proximité du capteur, une partie du rayonnement infrarouge émis est réfléchi vers le récepteur, et le capteur en déduit une information relative à la présence d'un objet à proximité de la surface tactile.

Un inconvénient de ce type de dispositif réside dans le fait que l'émission du rayonnement infrarouge par les capteurs de proximité entraîne une surconsommation d'énergie indésirable.

Il serait souhaitable de pouvoir disposer d'un dispositif d'interface utilisateur sans contact susceptible de fonctionner sans émettre de rayonnement.

Par ailleurs, les surfaces tactiles, écrans tactiles, et les capteurs de proximité du type susmentionné, sont des dispositifs relativement complexes à réaliser.

Il serait souhaitable de pouvoir réaliser des surfaces et écrans tactiles et sans contact plus facilement. Il serait en outre souhaitable de pouvoir réaliser de tels dispositifs sur tous types de support et en particulier sur des supports souples tels que du plastique, du papier, du carton ou du tissu, sur des supports de grandes dimensions (panneaux publicitaires), ou sur des supports jetables tels que des emballages de produits de consommation courante.

On a déjà proposé de réaliser des composants électroniques de type transistor, diode électroluminescente et photodétecteur, à base de matériaux conducteurs et semiconducteurs organiques. Ces matériaux présentent l'avantage d'être plus faciles à déposer et moins fragiles que les matériaux conducteurs et semiconducteurs inorganiques (par exemple le silicium) utilisés dans les filières technologiques traditionnelles.

La réalisation de composants semiconducteurs organiques reste toutefois relativement complexe. En particulier, il est nécessaire de prévoir des phases de dépôt à basse pression par évaporation et des phases de recuit à des températures relativement élevées, par exemple supérieures à 250°C. Il en résulte que de tels composants ne peuvent être réalisés que sur des supports particulièrement résistants, et à l'aide d'équipements relativement coûteux. En outre, la juxtaposition de tels composants sur des grandes surfaces est difficile, car les équipements de dépôt peuvent difficilement (ou à coûts prohibitifs) traiter des supports de dimensions importantes (par exemple de diamètre supérieur à 30 cm).

Il serait par ailleurs souhaitable, par exemple dans le domaine de la publicité ou de la communication, de pouvoir réaliser une surface d'affichage capable d'afficher une animation et offrant des possibilités d'interaction avec un utilisateur.

L'article de Christophe Premont "Photo detectors and sensors designed to be flexible", Electronic Engineering Times Europe, 14 septembre 2011, pages 17-18 (document XP002674972), décrit un dispositif d'interface utlisateur tactile ou sans contact avec une matrice de capteurs de photons organiques, pouvant être imprimés sur un support plastique et permettant de détecter la position ou le mouvement de la main de l'utilisateur. Un rétro-éclairage par LED infrarouge est aussi envisagé.

Par ailleurs, le brevet US2009/0123029 A1 décrit un dispositif permettant la détection d'un organe d'actionnement sur une surface d'interaction comme par exemple un écran. Pour cela d'abord on obtient, d'une part, une image d'ombre de l'organe d'actionnement avec la lumière ambiante et, d'autre part, une image différentielle entre une image directe, obtenue par rétro-éclairage de l'écran, et l'image d'ombre. Ensuite, on utilise sélectivement l'une ou l'autre image en fonction de la valeur d'un paramètre de commutation. Le rétro-éclairage peut se faire par lumière infrarouge et le paramètre de commutation peut être l'intensité d'une composante infrarouge de la lumière ambiante.

### Résumé

Ainsi, un objet d'un mode de réalisation de la présente invention est de prévoir un dispositif d'interface utilisateur palliant au moins en partie certains des inconvénients des dispositifs existants.

Selon un premier aspect, un objet d'un mode de réalisation de la présente invention est de prévoir un dispositif d'interface susceptible d'être actionné sans contact avec l'utilisateur.

Un autre objet d'un mode de réalisation de la présente invention est de prévoir un dispositif d'interface utilisateur sans contact susceptible de fonctionner sans émettre de rayonnement.

Selon un second aspect, un objet d'un mode de réalisation de la présente invention est de prévoir un dispositif d'interface utilisateur à base de matériaux conducteurs et semiconducteurs organiques.

Un autre objet d'un mode de réalisation de la présente invention est de prévoir un dispositif d'interface utilisateur plus facile à réaliser que les dispositifs connus.

Un autre objet d'un mode de réalisation de la présente invention est de prévoir un dispositif d'interface utilisateur réalisable sur des supports plus variés que les dispositifs actuels et notamment sur des supports à bas coût tels que le plastique, le papier, le tissu, etc.

Selon un troisième aspect, un objet d'un mode de réalisation de la présente invention est de prévoir une surface d'affichage interactive susceptible d'être utilisée à des fins publicitaires ou de communication.

Ainsi, un mode de réalisation de la présente invention prévoit un dispositif d'interface utilisateur tactile ou sans contact tel que défini par la revendication 1.

Selon un mode de réalisation de la présente invention, ce dispositif est adapté à déduire des variations d'ombre une information représentative d'une variation de distance entre l'organe d'actionnement et la matrice de capteurs.

Selon un mode de réalisation de la présente invention, ce dispositif est adapté à déduire des variations d'ombre une information représentative d'une variation de la position de l'organe d'actionnement parallèlement à la matrice de capteurs.

Selon un mode de réalisation de la présente invention, ce dispositif est dépourvu de système optique entre la matrice de capteurs et l'organe d'actionnement.

Selon un mode de réalisation de la présente invention, une couche translucide de protection revêt la matrice de capteurs.

Selon un mode de réalisation de la présente invention, le support diélectrique est en un matériau du groupe comprenant le verre, le plastique, le papier, le carton et le tissu.

Selon un mode de réalisation de la présente invention, les composants sont réalisés à une température inférieure à 150°C et à pression atmosphérique.

Selon un mode de réalisation de la présente invention, les composants semiconducteurs comprennent une matrice de pixels d'affichage lumineux.

Un autre mode de réalisation de la présente invention prévoit une surface d'affichage interactif comportant un dispositif d'interface du type susmentionné, ce dispositif comportant des moyens d'affichage et au moins un détecteur photosensible de présence.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 est une vue en perspective représentant de façon schématique un mode de réalisation d'un dispositif d'interface utilisateur ;
la figure 2 est une vue en coupe du dispositif d'interface utilisateur de la figure 1 ;
la figure 3 est une vue en coupe représentant une variante de réalisation d'un dispositif d'interface utilisateur ;
la figure 4 est une vue en coupe représentant une autre variante de réalisation d'un dispositif d'interface utilisateur ;
les figures 5A et 5B sont des vues en coupe représentant de façon schématique et partielle un mode de réalisation d'un dispositif d'interface utilisateur à base de matériaux conducteurs et semiconducteurs organiques ;
la figure 6 est une vue en coupe représentant de façon schématique et partielle une variante de réalisation du dispositif des figures 5A et 5B ; et
la figure 7 représente, de façon schématique, un mode de réalisation d'une surface d'affichage interactive susceptible d'être utilisée à des fins publicitaires.

### Description détaillée

Par souci de clarté, de mêmes éléments ont été désignés par de mêmes références aux différentes figures et, de plus, comme cela est habituel dans la représentation des circuits intégrés, les diverses figures ne sont pas tracées à l'échelle. En outre, seuls les éléments utiles à la compréhension de l'invention ont été représentés et seront décrits. En particulier, l'utilisation faite des dispositifs d'interface utilisateur décrits ci-après n'a pas été détaillée. L'homme de l'art saura utiliser les dispositifs proposés dans tout type de système susceptible d'être commandé via une interface tactile et/ou sans contact. De plus, les moyens de traitement des informations fournies par les dispositifs d'interface utilisateur décrits ci-après, et les moyens de liaison avec le ou les systèmes à commander, sont à la portée de l'homme de l'art et ne seront pas décrits.

Selon un premier aspect d'un mode de réalisation d'un dispositif d'interface utilisateur, on prévoit un dispositif d'interface utilisateur adapté à détecter des variations de l'ombre d'un organe d'actionnement sur une matrice de capteurs de photons, ou photodétecteurs, et à en déduire une information représentative d'une variation de position de l'organe d'actionnement.

On notera que par position de l'organe d'actionnement on entend ici une position relative par rapport au dispositif d'interface. On pourra notamment prévoir un mode d'utilisation dans lequel c'est le dispositif d'interface utilisateur lui-même qui est déplacé, l'organe d'actionnement restant fixe.

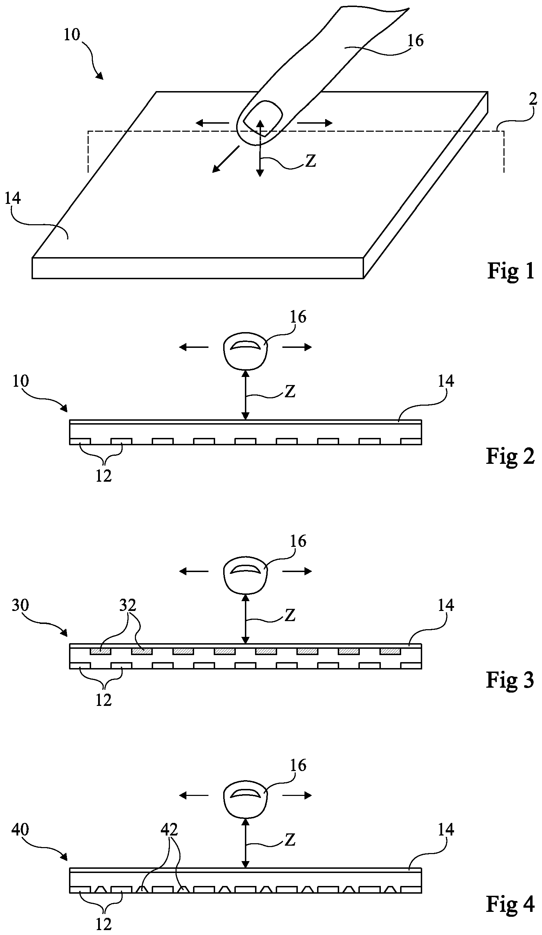

Les figures 1 et 2 représentent de façon schématique un mode de réalisation d'un dispositif 10 d'interface utilisateur. La figure 1 est une vue en perspective du dispositif 10, et la figure 2 est une vue en coupe selon le plan 2 de la figure 1.

Le dispositif 10 comprend une matrice de capteurs de photons, ou photodétecteurs 12 (figure 2). Dans cet exemple, les capteurs 12 sont disposés sur une surface plane. Des modes de réalisation pourront toutefois être prévus dans lesquels les capteurs 12 sont disposés sur une surface non plane. La matrice de capteurs 12 peut être surmontée d'un revêtement de protection transparent ou translucide 14, par exemple une plaque de verre ou un revêtement en plastique.

Le dispositif 10 est adapté à détecter des variations de l'ombre portée d'un organe d'actionnement 16 sur la matrice de capteurs 12, lorsque l'organe d'actionnement est disposé entre une source lumineuse et la matrice.

L'organe d'actionnement 16 peut être un doigt de l'utilisateur, sa main, ou tout autre objet. La source de lumière est de préférence la lumière ambiante, par exemple le soleil ou l'éclairage électrique intérieur d'une pièce d'un bâtiment.

Dans cet exemple, l'organe d'actionnement 16 est placé directement en regard de la matrice de capteurs 12, c'est-à-dire qu'aucun système optique n'est prévu entre la matrice et l'organe d'actionnement. La surface occupée par la matrice de capteurs est de préférence supérieure à la surface de la projection de l'organe d'actionnement dans le plan de cette matrice. Plus généralement (en particulier si la matrice de capteurs 12 n'occupe pas une surface plane), la surface de la matrice de capteurs 12 est supérieure à la surface de l'organe d'actionnement en regard de cette matrice.

Dans un mode de réalisation préféré, le dispositif 10 est adapté à détecter des déplacements de l'organe d'actionnement dans un plan parallèle au plan de la matrice de capteurs 12, et des variations de la distance Z entre l'organe d'actionnement et la matrice de capteurs 12.

Pour cela, lors d'une phase d'initialisation, le dispositif 10 mesure la luminosité ambiante, c'est-à-dire l'intensité lumineuse reçue par chaque capteur 12 lorsqu'aucun organe d'actionnement n'est disposé en regard de la matrice de capteurs 12.

Lorsque l'organe d'actionnement 16 est placé entre la source lumineuse et la matrice de capteurs, l'ombre portée de l'organe d'actionnement sur la matrice de capteurs entraîne une diminution de l'intensité lumineuse reçue par certains des capteurs 12. Ceci permet au dispositif 10 de détecter la présence de l'organe d'actionnement 16 à proximité de la matrice et, le cas échéant, de suivre les déplacements de l'organe d'actionnement dans un plan parallèle au plan de la matrice (ou parallèlement à la surface occupée par la matrice si cette surface n'est pas plane).

Lorsque la distance Z entre l'organe d'actionnement et la matrice de capteurs 12 varie, le niveau d'intensité lumineuse reçu par les capteurs 12 varie également. En particulier, lorsque l'organe d'actionnement 16 est approché de la matrice de capteurs 12, l'intensité lumineuse reçue par les capteurs 12 à l'ombre de l'organe d'actionnement diminue, et lorsque l'organe d'actionnement 16 est éloigné de la matrice de capteurs, l'intensité lumineuse augmente. Le dispositif 10 est adapté à déduire des variations d'intensité de l'ombre portée de l'organe d'actionnement une information relative aux variations de la distance Z entre l'organe d'actionnement et la matrice de capteurs. Dans une variante de réalisation, on peut prévoir une phase d'étalonnage permettant de réaliser une correspondance entre le niveau d'intensité de l'ombre portée de l'organe d'actionnement et la distance entre l'organe d'actionnement et les capteurs 12. Ceci permet au dispositif 10 de mesurer la distance Z entre l'organe d'actionnement et les capteurs 12.

Ainsi, dans un mode de réalisation préféré, le dispositif 10 est adapté à détecter la position en trois dimensions de l'organe d'actionnement 16 dans l'espace situé en regard de la matrice de capteurs.

Bien que cela n'ait pas été représenté sur les figures, le dispositif 10 peut comprendre des moyens de traitement des signaux fournis par les capteurs 12 (par exemple un microprocesseur), et des moyens de communication avec un appareil ou un système à commander (liaison filaire ou sans fil) .

En outre, et bien que cela n'ait pas été représenté, chaque photodétecteur 12 peut comprendre une lentille de focalisation, par exemple une lentille de Fresnel. Une matrice de lentilles fait alors interface entre la région photosensible de la matrice de photodétecteurs 12 et le revêtement 14, ou est intégrée au revêtement 14. La prévision de lentilles permet d'améliorer la résolution latérale de détection de l'organe d'actionnement, notamment lorsque celui-ci est éloigné du dispositif 10.

Un avantage du dispositif d'interface 10 décrit en relation avec les figures 1 et 2 est qu'il est susceptible d'être actionné sans contact avec l'utilisateur. On notera toutefois que le dispositif 10 peut également fonctionner à la manière d'une surface tactile, c'est-à-dire que si l'utilisateur fait glisser son doigt sur la face supérieure du dispositif (face supérieure du revêtement de protection 14 dans cet exemple), le dispositif sera en mesure de déterminer la position en deux dimensions de l'organe d'actionnement sur la surface de glissement (distance Z égale à l'épaisseur du revêtement de protection 14).

Un autre avantage du dispositif d'interface 10 est qu'il permet de fournir une information relative à la distance entre l'organe d'actionnement et les capteurs 12. Ceci permet par exemple de mettre en oeuvre des applications de contrôle d'objets virtuels en trois dimensions, ou de navigation en trois dimensions.

Un autre avantage du dispositif d'interface 10 est qu'il ne nécessite pas, pour son fonctionnement, l'émission d'un rayonnement infrarouge ou autre, ce qui permet de minimiser sa consommation électrique.

Dans le mode de réalisation décrit ci-dessus, on utilise l'ombre de l'organe d'actionnement, portée sur la surface de détection, pour obtenir une information relative à la position de l'organe d'actionnement. On pourra également utiliser l'image de l'organe d'actionnement, vue par les capteurs de photons. On notera qu'en pratique, l'ombre portée et l'image de l'organe d'actionnement ne coïncident pas, sauf si la source de lumière est placée exactement dans l'axe de projection de l'organe d'actionnement sur la matrice de capteurs. En variante, le dispositif 10 pourra détecter à la fois l'ombre portée et l'image de l'organe d'actionnement pour obtenir une information plus précise relative à la position ou aux variations de la position de l'organe d'actionnement. Le dispositif 10 comprend par exemple un logiciel de traitement des signaux fournis par la matrice de photodétecteurs, adapté à détecter l'ombre portée et éventuellement l'image de l'organe d'actionnement.

Dans un mode de réalisation préféré, le dispositif 10 est adapté à fonctionner (c'est-à-dire à détecter l'ombre portée de l'organe d'actionnement) lorsque l'organe d'actionnement 16 est situé à une distance supérieure à 10 cm de la matrice de capteurs, par exemple une distance comprise entre 10 cm et 1 m.

La figure 3 est une vue en coupe représentant une variante de réalisation dans laquelle un dispositif d'interface utilisateur 30 comprend un écran d'affichage, de façon à réaliser une interface interactive.

Le dispositif 30 de la figure 3 comprend les mêmes éléments que le dispositif 10 des figures 1 et 2, et comprend en outre une matrice de pixels 32 d'affichage lumineux (ou de rétro-éclairage). Dans cet exemple, les pixels 32, par exemple des diodes électroluminescentes, sont disposés dans un plan parallèle à la matrice de photodétecteurs 12, et entre la matrice de photodétecteurs et le revêtement de protection 14. La matrice de photodétecteurs 12 et la matrice de pixels 32 sont superposées avec un léger décalage de façon que, en vue de dessus, les pixels 32 ne soient pas en regard des capteurs 12, ce qui masquerait les capteurs 12 et empêcherait la détection de l'ombre portée de l'organe d'actionnement.

Dans une variante de réalisation, la matrice de capteurs de photons 12 est placée entre la matrice de pixels d'affichage 32 et le revêtement de protection 14. Dans ce cas, on peut prévoir de superposer les capteurs 12 et les pixels 32 sans décalage, à condition que les capteurs 12 soient réalisés en des matériaux transparents ou translucides.

Dans une autre variante de réalisation, les matrices de détection et d'affichage ne sont pas superposées, mais sont réalisées dans un même niveau de l'empilement de couches conductrices et semiconductrices (alternance de pixels 32 et de capteurs 12).

On notera que l'écran d'affichage associé au dispositif d'interface 30 n'est pas nécessairement un écran à diodes électroluminescentes, mais pourra être réalisé dans toute autre technologie adaptée.

De plus, dans une autre variante de réalisation, l'écran d'affichage n'est pas superposé au dispositif d'interface utilisateur mais est déporté et relié au dispositif d'interface par une liaison filaire ou sans fil.

La figure 4 est une vue en coupe représentant une variante de réalisation de l'invention dans laquelle un dispositif d'interface utilisateur 40 comprend des détecteurs de proximité à infrarouge. Le dispositif 40 de la figure 4 comprend les mêmes éléments que le dispositif 10 des figures 1 et 2, et comprend en outre une matrice d'émetteurs infrarouge 42. En fonctionnement, chacun des émetteurs 42 émet en permanence un rayonnement infrarouge. Lorsque l'organe d'actionnement 16 survole un émetteur 42, une partie du rayonnement émis est réfléchi vers un photodétecteur 12 voisin, qui peut en déduire une information relative à la présence d'un objet au-dessus de l'interface. Ainsi, les émetteurs infrarouge 42, en combinaison avec les photodétecteurs 12, permettent au dispositif 40 de mettre en oeuvre les mêmes fonctions de détection des variations de position de l'organe d'actionnement 16 que les photodétecteurs 12 seuls utilisés comme détecteurs d'ombrage.

Un avantage de la détection infrarouge par rapport à la détection d'ombrage est que son fonctionnement est indépendant de l'éclairage ambiant et donc plus robuste. En particulier, la détection infrarouge peut fonctionner dans l'obscurité, en l'absence d'une source de lumière extérieure. On pourra prévoir d'alterner entre un mode de fonctionnement basse consommation, basé sur la détection de l'ombre portée de l'organe d'actionnement par les photodétecteurs 12 lorsque l'éclairage ambiant le permet, et un mode de fonctionnement infrarouge lorsque les conditions d'éclairement ne permettent pas la détection d'ombre portée. On pourra par exemple prévoir un capteur de pénombre pour passer automatiquement du mode basse consommation au mode infrarouge lorsque la luminosité ambiante devient trop faible pour permettre la détection d'ombre portée.

On pourra prévoir une émission infrarouge (par les émetteurs 42) avec modulation de fréquence, ce qui permet, à la réception par les photodétecteurs 12, de discriminer l'ombrage de l'infrarouge. Ceci permet d'utiliser simultanément le fonctionnement par infrarouge et le fonctionnement par détection d'ombre portée de façon à obtenir une information plus précise relative à la position de l'organe d'actionnement. L'émission infrarouge avec modulation de fréquence permet en outre de réduire la consommation de la source infrarouge.

Comme dans l'exemple décrit en relation avec la figure 3, le dispositif d'interface 40 peut être associé à un écran d'affichage, non visible sur la figure 4.

Selon un deuxième aspect d'un mode de réalisation de la présente invention, on prévoit de réaliser un dispositif d'interface utilisateur à base de matériaux conducteurs et semiconducteurs organiques.

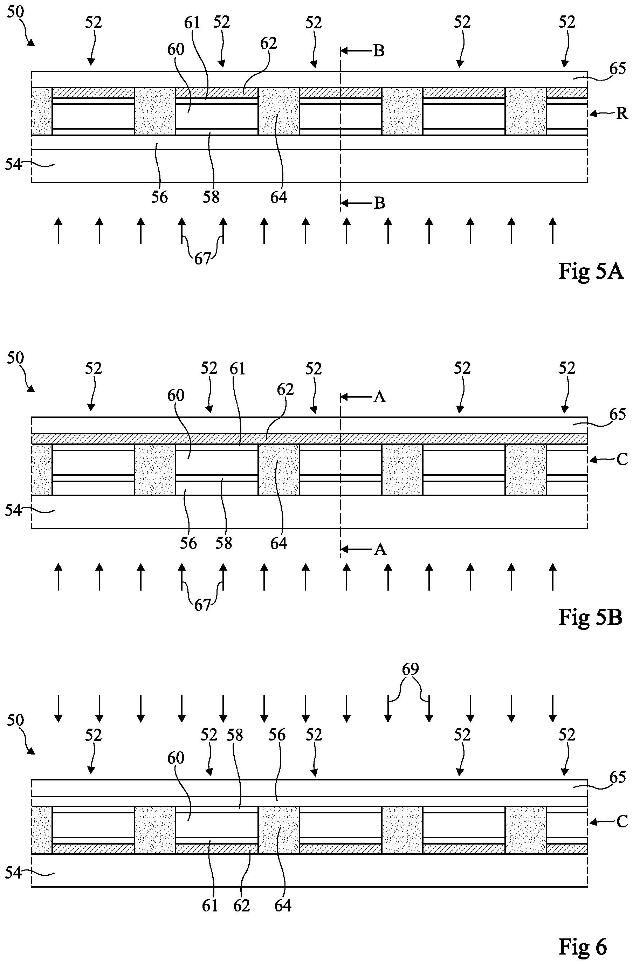

Les figures 5A et 5B sont des vues en coupe représentant de façon schématique et partielle un mode de réalisation d'un dispositif 50 d'interface utilisateur à base de matériaux conducteurs et semiconducteurs organiques. La figure 5B est une vue en coupe dans le plan B de la figure 5A, et la figure 5A est une vue en coupe dans le plan A de la figure 5B.

Le dispositif 50 comprend une matrice de capteurs de photons, ou photodétecteurs 52, de préférence adaptée à détecter des variations de l'ombre portée d'un organe d'actionnement (non visible sur les figures 5A et 5B). Dans cet exemple, les photodétecteurs 52 sont formés sur une face d'un support ou substrat diélectrique transparent ou translucide 54, par exemple en verre ou en plastique. Chaque photodétecteur 52 comprend un empilement comportant, dans l'ordre à partir du substrat 54 : une électrode transparente 56, par exemple en oxyde d'indium-étain (ITO, de l'anglais Indium Tin Oxyde) ; une couche 58 en un polymère semiconducteur organique transparent très dopé (couche donneuse d'électrons), par exemple un polymère connu sous la dénomination PEDOT:PSS, qui est un mélange de poly(3,4)-éthylènedioxythiophène et de polystyrène sulfonate de sodium ; une couche 60 en un polymère semiconducteur organique, par exemple le poly(3-hexylthiophène) ou poly(3-hexylthiophène-2,5-diyl) (semiconducteur de type P), connu sous la dénomination P3HT, ou le [6,6]-phényl-C₆₁-butanoate de méthyle (semiconducteur de type N), connu sous la dénomination PCBM ; une couche 61 en un polymère semiconducteur organique très dopé (couche donneuse de trous) ; et une électrode 62, par exemple en aluminium ou en argent. Les électrodes inférieures 56 ont, en vue de dessus, la forme de bandes parallèles, chaque bande 56 adressant tous les photodétecteurs d'une même ligne R (figure 5A) de la matrice. Les électrodes supérieures 62 ont, vu de dessus, la forme de bandes orthogonales aux électrodes 56, chaque bande 62 adressant tous les photodétecteurs d'une même colonne C (figure 5B) de la matrice. Dans cet exemple, la couche d'électrode inférieure 56 s'étend de façon continue sous chaque rangée R de photodétecteurs 52 de la matrice, et la couche d'électrode supérieure 62 s'étend de façon continue sur chaque colonne C de photodétecteurs 52 de la matrice. Latéralement, les régions semiconductrices 60 des photodétecteurs 52 sont séparées les unes des autres par un matériau diélectrique 64. En outre, un revêtement de protection transparent 65 recouvre la face supérieure de la matrice (côté électrodes 62).

Dans cet exemple, les photodétecteurs 52 sont destinés à être éclairés à travers le substrat transparent 54 (et à travers les couches transparentes 56 et 58). Sur les figures 5A et 5B, le rayonnement incident est représenté par des flèches 67, côté substrat 54.

La figure 6 est une vue en coupe représentant de façon schématique et partielle une variante de réalisation du dispositif 50 des figures 5A et 5B. Le dispositif de la figure 6 diffère du dispositif des figures 5A et 5B en ce que l'ordre des couches des photodétecteurs 52 est inversé. La figure 6 est une vue en coupe selon une colonne C de photodétecteurs. La coupe correspondante (selon une rangée) n'a pas été représentée.

Dans cet exemple, chaque photodétecteur 52 comprend un empilement comportant, dans l'ordre à partir du substrat 54, une électrode 62, par exemple en aluminium ou en argent, une couche 61 en un polymère semiconducteur organique très dopé (couche donneuse de trous), une couche 60 en un polymère semiconducteur organique, une couche 58 en un polymère semiconducteur organique transparent très dopé (couche donneuse d'électrons), et une électrode transparente 56. Un revêtement de protection transparent 65 recouvre la face supérieure de la matrice (côté électrodes 56).

Les photodétecteurs 52 sont ici destinés à être éclairés à travers le revêtement de protection 65 (et à travers les couches transparentes 56 et 58). Sur la figure 6, le rayonnement incident est représenté par des flèches 69, côté revêtement transparent 65.

On propose ici de réaliser le dispositif 50 par des techniques d'impression. Les matériaux des couches 56 à 65 susmentionnées sont déposés sous forme liquide, par exemple sous forme d'encres conductrices et semiconductrices à l'aide d'imprimantes à jet d'encre. On notera que par matériaux sous forme liquide, on entend ici également des matériaux en gel déposables par des techniques d'impression. Des étapes de recuit sont éventuellement prévues entre les dépôts des différentes couches, mais les températures de recuit peuvent ne pas dépasser 150°C, et le dépôt et les éventuels recuits peuvent être réalisés à la pression atmosphérique.

La réalisation de composants semiconducteurs organiques par des techniques d'impression est par exemple décrite dans l'article "CEA-LITEN S2S printing platform for Organic CMOS and Sensors Devices" de Jean-Yves Laurent et al, conférence LOPE-C, juin 2011, Francfort.

Un avantage du dispositif 50 est qu'il peut être réalisé plus facilement que les dispositifs existants. En particulier, il peut être réalisé sur des surfaces plus variées, et notamment sur des plus grandes surfaces et sur tout type de substrat, y compris sur des substrats ne résistant pas à la chaleur, par exemple sur des substrats souples en plastique, papier, carton, tissu, etc. On notera que dans le dispositif des figures 5A et 5B, si le substrat est opaque, on peut prévoir de réaliser l'électrode supérieure 62 en un matériau conducteur transparent, et d'éclairer le dispositif par la face supérieure (dans l'orientation de la figure).

Par ailleurs, le dispositif 50 peut être réalisé en utilisant des équipements (équipements de dépôt par impression) compatibles avec les équipements industriels de réalisation d'emballages, plasturgie, etc.

Un autre avantage du dispositif 50 est que son prix de revient est relativement bas, car les équipements nécessaires à sa réalisation (équipements de dépôt par impression) sont moins coûteux que les équipements nécessaires à la réalisation de dispositifs semiconducteurs inorganiques, et moins coûteux également que les équipements usuels utilisés pour réaliser des composants semiconducteurs organiques (équipements de dépôt par évaporation à basse pression et de recuit à haute température).

Diverses variantes et modifications apparaîtront à l'homme du métier. En particulier, l'homme du métier saura prévoir tout empilement de couches adapté, autre que ceux décrits en relation avec les figures 5A, 5B et 6, pour réaliser un photodétecteur. Il pourra notamment utiliser d'autres matériaux conducteurs, semiconducteurs, et diélectriques déposables sous forme liquide, que ceux mentionnés ci-dessus.

Plus généralement, on propose de réaliser des dispositifs d'interface utilisateur tactiles ou sans contact, dans lesquels des composants semiconducteurs sont réalisés par dépôt de matériaux conducteurs et semiconducteurs organiques liquides sur un support diélectrique. Outre la matrice de photodétecteurs, on pourra également prévoir de réaliser, par impression de matériaux organiques, une matrice d'affichage (voir figure 3) ou des capteurs de proximité à infrarouge (voir figure 4). Une application préférée dans laquelle l'invention est particulièrement avantageuse est dans des dispositifs du type décrit en relation avec les figures 1 à 4.

Par ailleurs, bien que cela n'ait pas été mentionné ci-dessus, on peut prévoir que, dans la matrice de photodétecteurs, un ou plusieurs transistors d'accès soient associés à chaque photodétecteur (matrice active). Les transistors peuvent également être réalisés à partir de matériaux semiconducteurs organiques sous forme liquide ou en gel, par des techniques d'impression.

Selon un troisième aspect d'un mode de réalisation de la présente invention, on prévoit une surface d'affichage interactive susceptible d'être utilisée, par exemple, à des fins publicitaires.

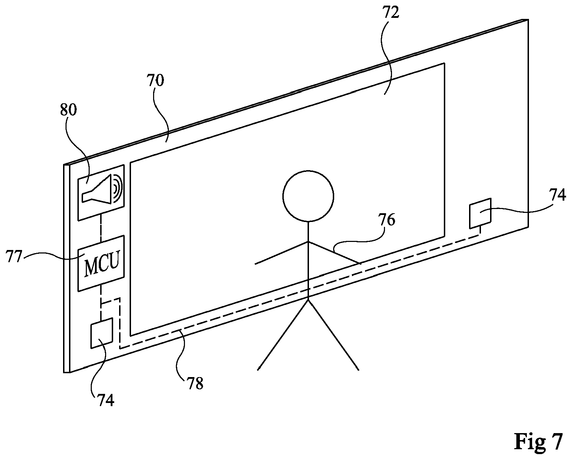

La figure 7 est une vue en perspective représentant de façon schématique un mode de réalisation d'une surface d'affichage interactive 70.

La surface 70 comprend une zone d'affichage (ou écran) 72. La zone d'affichage est de préférence de dimensions relativement importantes. De préférence, la zone 72 s'étend sur une surface supérieure à 3 m². La zone d'affichage 72 est réalisée par dépôt de matériaux conducteurs et semiconducteurs organiques sous forme liquide sur un support diélectrique, par des techniques d'impression. A titre d'exemple, la surface 70 est réalisée sur une affiche papier ou plastique, sur une vitrine en verre d'un magasin, sur du carton ou sur du tissu, etc. De tels supports peuvent constituer le support diélectrique sur lequel la zone d'affichage 72 est imprimée. Au besoin, une couche diélectrique d'interface peut être déposée par impression sur le support, par exemple si le support est poreux ou ne présente pas des propriétés diélectriques satisfaisantes. La zone d'affichage 72 est par exemple un écran à diodes électroluminescentes organiques. La réalisation de diodes électroluminescentes organiques par des techniques d'impression est par exemple décrite dans l'article "CEA-LITEN S2S printing platform for Organic CMOS and Sensors Devices" susmentionné. Plus généralement, la zone d'affichage 72 pourra être réalisée dans toute autre technologie permettant de former un écran d'affichage par dépôt de matériaux conducteurs, semiconducteurs organiques, et diélectriques sous forme liquide. A titre d'exemple, la zone 72 peut être réalisée à partir de matériaux organiques électroluminescents.

La surface 70 comprend au moins un détecteur 74 photosensible de présence (deux détecteurs 74 dans l'exemple représenté). Dans cet exemple, la surface 70 est formée sur une vitrine en verre d'un magasin, et les détecteur 74 sont placés vers des extrémités distinctes de la vitrine (côté bas gauche et côté bas droit), et adaptés à fournir un signal lorsqu'un passant 76 (utilisateur) ou un objet se trouve devant l'une ou l'autre de ces extrémités, dans le champ du détecteur. Le détecteur 74 peut être une simple photodiode ou photorésistance, un détecteur de proximité à infrarouge, une matrice de capteurs de photons du type décrit en relation avec les figures 1 à 6, ou tout autre détecteur photosensible. En tout état de cause, les détecteurs 74 sont réalisés par dépôt de matériaux conducteurs et semiconducteurs organiques sous forme liquide sur un support diélectrique, par des techniques d'impression.

Une unité de contrôle 77 est prévue pour commander la zone d'affichage 72 et lui faire afficher une animation (par exemple une image, un diaporama, ou une vidéo), ou, plus généralement, une information, lorsque les capteurs 74 détectent la présence d'un utilisateur devant la vitrine. L'unité de contrôle 77 peut être réalisée par des composants électroniques discrets, ou par circuits intégrés (l'unité 77 comprend par exemple un microcontrôleur). L'unité de contrôle 77 peut être rapportée sur la surface 70, par exemple par collage ou encastrement, ou bien déportée et logée dans un boîtier extérieur à la surface 70. Alternativement, l'unité de contrôle 77 peut, comme la zone d'affichage 72 et les capteurs photosensibles 74, être réalisée en électronique organique imprimée, directement sur la surface 70. Les connexions 78 entre l'unité de contrôle 77, la zone d'affichage 72, et les détecteurs 74, peuvent être sans fil ou filaires. Des pistes conductrices en un matériau conducteur transparent déposable sous forme liquide peuvent par exemple être imprimées sur la surface 70.

Dans l'exemple représenté, il est en outre prévu un dispositif 80 d'émission sonore, comportant par exemple un ou plusieurs haut-parleurs. Ceci permet de prévoir, outre l'animation visuelle affichée sur la zone d'affichage 72, une animation sonore. Le dispositif sonore peut être réalisé dans toute technologie connue, par exemple à base de matériaux piézoélectriques. Le dispositif 80 peut être rapporté sur la surface 70, par exemple par collage ou encastrement, ou bien être extérieur à la surface 70. Dans un mode de réalisation préféré, le dispositif 80 est réalisé en des matériaux déposables sous forme liquide (comprenant par exemple un matériau piézoélectrique organique), et formé directement sur la surface 70 par des techniques d'impression.

Pour son alimentation en énergie électrique, la surface interactive 70 peut être reliée à un réseau de distribution d'énergie électrique (tel que le secteur) ou à une batterie. Si les besoins en énergie électrique de la surface 70 ne sont pas trop importants, on pourra utiliser une batterie réalisée en des matériaux déposables sous forme liquide, imprimée directement sur la surface 70.

A titre d'exemple d'utilisation, on peut prévoir de réaliser un dispositif publicitaire comprenant une surface interactive sans contact de grande dimension (par exemple de l'ordre de plusieurs mètres carrés), adapté à déclencher l'affichage d'une animation dès qu'une personne (utilisateur) passe à proximité de la surface.

Dans une variante de réalisation, plusieurs détecteurs de présence 74 peuvent être prévus en différents points de la surface 70. L'unité de contrôle peut alors être programmée pour faire varier l'animation en fonction de la position de l'utilisateur devant la surface (déclenchements multiples).

Dans une autre variante de réalisation, une matrice de photodétecteurs du type décrit en relation avec les figures 1 à 6 peut être superposée à la zone d'affichage 72. La matrice de photodétecteurs joue alors le rôle des détecteurs de présence 74. Un tel mode de réalisation permet de mettre en oeuvre une animation interactive, c'est-à-dire réagissant à des actions de l'utilisateur (déplacements, changements de position, rapprochement ou éloignement de la surface, etc.).

Divers modes de réalisation ont été décrits, diverses variantes et modifications apparaîtront à l'homme de l'art.

En particulier, la surface d'affichage interactive décrite en relation avec la figure 7 pourra être utilisée à d'autres applications que l'animation d'une vitrine d'un commerce. Plus généralement, une telle surface d'affichage interactive pourra être utilisée pour tout type d'application publicitaire ou de communication. L'homme de l'art saura par exemple adapter le fonctionnement proposé pour réaliser des emballages interactifs pour des produits du commerce (alimentaires ou autres).

La mise en oeuvre de l'invention est à la portée de l'homme du métier à partir des indications fonctionnelles décrites ci-dessus et en utilisant des technologies en elles-mêmes connues.

## Revendications

1. Dispositif (10 ; 30 ; 40 ; 50) d'interface utilisateur tactile ou sans contact, comprenant des composants semiconducteurs organiques (12 ; 32 ; 42 ; 52) réalisés par dépôt de matériaux conducteurs et semiconducteurs organiques sous forme liquide sur un support diélectrique (54), lesdits composants comprenant une matrice de capteurs de photons (12 ; 52) adaptée à détecter des variations de l'ombre d'un organe d'actionnement (16), et une matrice d'émetteurs (42) infrarouge, le dispositif étant adapté à déduire des variations d'ombre une information représentative d'une variation de position de l'organe d'actionnement, et comprenant en outre un capteur de pénombre et des moyens pour activer les émetteurs (42) infrarouge lorsque la luminosité est inférieure à un seuil.

2. Dispositif (10 ; 30 ; 40 ; 50) selon la revendication 1, adapté à déduire desdites variations d'ombre une information représentative d'une variation de distance (Z) entre l'organe d'actionnement (16) et la matrice de capteurs (12 ; 52) .

3. Dispositif (10 ; 30 ; 40 ; 50) selon la revendication 1 ou 2, adapté à déduire desdites variations d'ombre une information représentative d'une variation de la position de l'organe d'actionnement (16) parallèlement à la matrice de capteurs (12 ; 52).

4. Dispositif (10 ; 30 ; 40 ; 50) selon l'une quelconque des revendications 1 à 3, dépourvu de système optique entre la matrice de capteurs (12 ; 52) et l'organe d'actionnement (16).

5. Dispositif (10 ; 30 ; 40 ; 50) selon l'une quelconque des revendications 1 à 4, dans lequel une couche translucide de protection (14 ; 65) revêt la matrice de capteurs (12 ; 52).

6. Dispositif (10 ; 30 ; 40 ; 50) selon l'une quelconque des revendications 1 à 5, dans lequel le support diélectrique est en un matériau du groupe comprenant le verre, le plastique, le papier, le carton et le tissu.

7. Dispositif (10 ; 30 ; 40 ; 50) selon l'une quelconque des revendications 1 à 6, dans lequel lesdits composants (12 ; 32 ; 42 ; 52) sont réalisés à une température inférieure à 150°C et à pression atmosphérique.

8. Dispositif (30) selon l'une quelconque des revendications 1 à 7, dans lequel lesdits composants semiconducteurs comprennent une matrice de pixels (32) d'affichage lumineux.

9. Surface (70) d'affichage interactif comportant un dispositif selon l'une quelconque des revendications 1 à 8, ledit dispositif comportant des moyens d'affichage (72) et au moins un détecteur (74) photosensible de présence.

## Patentansprüche

1. Eine Touch- bzw. berührungsempfindliche oder kontaktlose Benutzerinterfacevorrichtung (10; 30; 40; 50), die organische Halbleiterkomponenten (12; 32; 42; 52) aufweist, die durch Abscheiden von organischen Leiter- und Halbleitermaterialien in flüssiger Form auf einem dielektrischen Träger (54) gebildet werden, wobei die Komponenten eine Photonensensoranordnung (12; 52) aufweisen, die geeignet ist zum Detektieren von Schattenänderungen eines Betätigungsglieds (16) und eine Infrarotsenderanordnung (42), wobei die Vorrichtung geeignet ist, um aus den Schattenänderungen eine Information abzuleiten, die für eine Positionsänderung des Betätigungsglieds repräsentativ ist, und ferner einen Dunkelheitssensor und Mittel zum Aktivieren der Infrarotsensoren (42) aufweist, wenn die Helligkeit unter einem Schwellenwert ist.

2. Vorrichtung (10; 30; 40; 50) nach Anspruch 1, die geeignet ist, um aus den Schattenänderungen Informationen abzuleiten, die für eine Änderung des Abstands (Z) zwischen dem Betätigungsglied (16) und der Sensoranordnung (12; 52) repräsentativ ist.

3. Vorrichtung (10; 30; 40; 50) nach Anspruch 1 oder 2, die geeignet ist, aus den Schattenänderungen Informationen abzuleiten, die für eine Positionsänderung des Betätigungsglieds (16) parallel zu der Sensoranordnung (12; 52) repräsentativ ist.

4. Vorrichtung (10; 30; 40; 50) nach einem der Ansprüche 1 bis 3 ohne optisches System zwischen der Sensoranordnung (12; 52) und dem Betätigungsglied (16).

5. Vorrichtung (10; 30; 40; 50) nach einem der Ansprüche 1 bis 4, wobei eine durchscheinende Schutzschicht (14; 65) die Sensoranordnung (12; 52) abdeckt.

6. Vorrichtung (10; 30; 40; 50) nach einem der Ansprüche 1 bis 5, wobei der dielektrische Träger aus einem Material aus der Gruppe hergestellt ist, die Glas, Kunststoff, Papier, Pappe und Gewebe aufweist.

7. Vorrichtung (10; 30; 40; 50) nach einem der Ansprüche 1 bis 6, wobei die Komponenten (12; 32; 42; 52) bei einer Temperatur unter 150°C und bei Atmosphärendruck gebildet werden.

8. Vorrichtung (30) nach einem der Ansprüche 1 bis 7, wobei die Halbleiterkomponenten eine lichtemittierende Anzeigepixelanordnung (32) aufweisen.

9. Eine interaktive Anzeigeoberfläche (70), die die Vorrichtung nach einem der Ansprüche 1 bis 8 aufweist, wobei die Vorrichtung Anzeigemittel (72) und wenigstens einen photosensitiven Präsenzsensor (74) aufweist.

## Claims

1. A touch or contactless user interface device (10; 30; 40; 50), comprising organic semiconductor components (12; 32; 42; 52) formed by deposition of organic conductor and semiconductor materials in liquid form on a dielectric support (54), said components comprise an array of photon sensors (12 ; 52) capable of detecting variations of the shadow of an actuation member (16), and an array of infrared emitters (42), the device being capable of deducing from the variations of the shadow an information representative of a variation of the position of the actuation member, and further comprising a darkness sensor and means for activating the infrared emitters (42) when the luminosity is below a threshold.

2. The device (10; 30; 40; 50) of claim 1, capable of deducing from said shadow variations information representative of a variation of the distance (Z) between the actuation member (16) and the sensor array (12; 52).

3. The device (10; 30; 40; 50) of claim 1 or 2, capable of deducing from said shadow variations information representative of a variation of the position of the actuation member (16) parallel to the sensor array (12; 52).

4. The device (10; 30; 40; 50) of any of claims 1 to 3, having no optical system between the sensor array (12; 52) and the actuation member (16).

5. The device (10; 30; 40; 50) of any of claims 1 to 4, wherein a translucent protection layer (14; 65) coats the sensor array (12; 52).

6. The device (10; 30; 40; 50) of any of claims 1 to 5, wherein the dielectric support is made of a material from the group comprising glass, plastic, paper, cardboard, and fabric.

7. The device (10; 30; 40; 50) of any of claims 1 to 6, wherein said components (12; 32; 42; 52) are formed at a temperature smaller than 150°C and at atmospheric pressure.

8. The device (30) of any of claims 1 to 7, wherein said semiconductor components comprise a light-emitting display pixel array (32).

9. An interactive display surface (70) comprising the device of any of claims 1 to 8, said device comprising display means (72) and at least one photosensitive presence sensor (74).
